# EUROPÄISCHE PATENTSCHRIFT

(11) **EP 0 907 089 B1**
(45) Veröffentlichungstag und Bekanntmachung des Hinweises auf die Patenterteilung: **22.01.2003**
(21) Anmeldenummer: 98114521.2
(22) Anmeldetag: 03.08.1998
(51) Int. Cl.: G02B 5/28, G02B 27/28

(54) **Kristalloptisches Interferenzfilter mit periodischem Durchlassbereich sowie Verfahren zur aktiven Anpassung des spektralen Durchlassbereichs**
Crystal optical interference filter with periodic passband and method of actively adapting the spectral passband
Filtre interférentiel à cristal optique avec bande passante périodique et procédé d'adaptation active de la bande passante spectrale

(30) Priorität: 02.10.1997 DE 19743716
(43) Veröffentlichungstag der Anmeldung: 07.04.1999
(73) Patentinhaber: Deutsche Telekom AG, 53113 Bonn (DE)
(72) Erfinder: Dultz, Wolfgang Prof. Dr., 65936 Frankfurt/Main (DE); Beresnev, Leonid, Dr., Columbia, MD 21044 (US); Schmitzer, Heidrun Dr., 93051 Regensburg (DE); Hils, Bernd Dipl.-Phys., 61462 Königstein/Taunus (DE); Barta, Cestmir Dr., 25066 Zdiby (Prag-Vychod) (CZ)
(74) Vertreter: Mierswa, Klaus

(56) Entgegenhaltungen:
- GB-A- 1 310 432
- US-A- 4 602 342
- US-A- 5 469 279
- US-A- 5 528 393
- WEIS R S ET AL: "Electromagnetic transmission and reflection characteristics of anisotropic multilayered structures" JOURNAL OF THE OPTICAL SOCIETY OF AMERICA A (OPTICS AND IMAGE SCIENCE), SEPT. 1987, USA, Bd. 4, Nr. 9, Seiten 1720-1740, XP002136872 ISSN: 0740-3232

## Beschreibung

Die Erfindung betrifft ein kristalloptisches Interferenzfilter mit periodischem Durchlaßbereich, insbesondere für den Wellenlängenmultiplexbetrieb von optischen Netzen in der Telekommunikation, sowie ein Verfahren zur aktiven Anpassung des spektralen Durchlaßbereichs eines derartigen Interferenzfilters.

Zur Erhöhung der Übertragungskapazität von optischen Nachrichtenübertragungssystemen ist die Einführung des sogenannten WDM (wavelength division multiplex) -Betriebs geplant. Dabei erfolgt die Übertragung nicht nur auf einem spektralen Kanal, sondern parallel auf mehreren Kanälen, von denen jeder einzelne Licht einer eigenen individuellen Wellenlänge überträgt. Die einzelnen Kanäle liegen im allgemeinen in etwa gleichem spektralen Abstand nebeneinander. Dieser Abstand beträgt z. B. ein Nanometer, kann aber im Prinzip noch viel kleiner sein. Da die Verstärkung dieses spektralen Kamms im dritten optischen Fenster bei 1550 nm besonders ökonomisch mit optischen Verstärkern erfolgen kann, ist dieser Wellenlängenbereich für den WDM-Betrieb besonders interessant.

Optische spektrale Filter mit einem kammartigen Durchlaßbereich, der an die Übertragungskanäle angepaßt ist, erlauben die Regeneration der spektralen Reinheit im WDM-Betrieb. Das passive Filter unterdrückt Licht, das zwischen den spektralen Kanälen auftritt, z. B. durch die spontane Emission im optischen Verstärker, durch Brillouin- oder Ramanstreuung oder durch anderes Fremdlicht, und erhöht somit das Signal-Rauschverhältnis bei der Detektion.

Bei der aktive Abstimmung solcher Filter wird im allgemeinen der kammartige Durchlaßbereich auf der Wellenlängenskala parallel verschoben. Solche abstimmbaren Filter erlauben das Zu- oder Abschalten weiterer Systeme von parallelen spektralen Kanälen oder das präzise Nachjustieren des Wellenlängenkamms.

Interferenzfilter mit periodischem kammartigem Durchlaßbereich sind seit langem bekannt. Man unterscheidet solche mit Vielstrahlinterferenz wie das Interferenzgitter oder das Fabry-Perot Filter und solche mit Zweistrahlinterferenz wie das Michelson- und das Mach-Zehnder Interferometer. Bei der Vielstrahlinterferenz wird der Durchlaßbereich durch periodische schmale Transmissionslinien gekennzeichnet, zwischen denen breite undurchlässige Bereiche liegen. Bei der Zweistrahlinterferenz ist die Transmissionscharakteristik eine Sinusquadratverteilung mit gleich breiten Transmissions- und Absorptionsbereichen.

Unter den Zweistrahlinterferenzfiltern gibt es eine besondere Klasse, die mechanisch sehr stabil ist, dafür aber nicht ohne weiteres abgestimmt werden kann. Das sind die kristalloptischen Interferenzfilter mit periodischem Durchlaßbereich, wie das Lyotfilterelement, das Solcfilter und ähnliche Anordnungen. Bei diesen Filtern sind die interferierenden Lichtstrahlen die schnelle und langsame Eigenwelle in einem doppelbrechenden Kristall. Diese Filter sind mechanisch so stabil wie der Kristall. Da die Länge der Interferometerarme aber eindeutig durch die Dicke d der Kristallplatte festgelegt wird, besteht keine kontinuierliche Abstimmungsmöglichkeit, außer durch Temperaturänderungen. Das Umschalten von den Transmissionsbereichen auf die Absorptionsbereiche und umgekehrt, d. h. die Verschiebung des Filters um eine halbe Periode (reziproker Durchlaßbereich), ist durch Veränderung der Eingangspolarisation immer möglich.

Der Abstand der Kanäle ist bei kristalloptischen Interferenzfiltern aus doppelbrechendem Material durch die Differenz der Brechungsindizes der schnellen bzw. langsamen Achse des Kristalls, sowie durch dessen Dicke d festgelegt. Man kann zeigen, daß bei dem bekanntesten doppelbrechenden Material Kalkspat ein etwa 14 mm dicker Kristall notwendig ist, um den für den WDM-Betrieb von optischen Netzen geforderten Kanalabstand von mindestens einem Nanometer zu realisieren. Die Gewinnung derartig großer Kalkspatkristalle ist jedoch sehr kostspielig, so daß diese Filter nur für seltene Sonderzwecke eingesetzt werden können.

Aus der Veröffentlichung "Electromagnetic transmission and reflection characteristics of anisotropic multilayered structures" von R.S. Weis und T.K. Gaylord, erschienen in J. Opt. Soc. Am., Vol. 4, September 1987, wird ein auf Vielstralinterferenz beruhendes sehr schmalbandiges durchstimmbares Spektralfilter, welches als Fabry-Perot/Solc-Filter bezeichnet wird, beschrieben. Durch die US 5,469,279 ist ein Vielstrahl-Solc-Filter bekannt geworden, in welchem Phasenplatten aus Flüssigkristallen zum Einsatz kommen, um hohe Auslösung und Durchstimmbarkeit zu realisieren.

Der Erfindung liegt deshalb die Aufgabe zugrunde, ein kristalloptisches Interferenzfilter zur Verfügung zu stellen, welches kostengünstig ist und die Anpassung des spektralen Durchlaßbereichs des Filters an die Anforderungen des optischen WDM-Netzes erlaubt. Weiterhin soll ein Verfahren zur aktiven Abstimmung des Interferenzfilters zur Verfügung gestellt werden.

Diese Aufgabe wird erfindungsgemäß gelöst durch ein kristalloptisches Interferenzfilter mit periodischem spektralen Durchlaßbereich, insbesondere für den Wellenlängenmultiplexbetrieb von optischen Netzen in der Telekommunikation, wenigstens bestehend aus einem doppelbrechenden Element sowie einem an dessen Ausgang angeordneten Polarisator, wobei das doppelbrechende Element ein Quecksilber-I-Halogenid-Einkristall aus Hg₂Cl₂ und/oder Hg₂Br₂ und/oder Hg₂J₂ ist, wobei zur kontinuierlichen Durchstimmung des spektralen Durchlaßbereichs des Interferenzfilters zwischen dem doppelbrechenden Element und dem Ausgangspolarisator eine λ/4-Retardierungsplatte unter 45° relativ zur schnellen bzw. langsamen Achse des doppelbrechenden Elements eingefügt ist und die Abstimmung durch Anpassung der Durchlaßrichtung des Ausgangspolarisator möglich ist.

Quecksilberhalogenide sind im Infraroten, d.h. auch im Wellenlängenbereich um 1500 Nanometer, der für den WDM-Betrieb von optischen Netzen genutzt wird, transparent und weisen in diesem Bereich eine hohe Doppelbrechung auf. Der Unterschied der Brechungsindizes der schnellen und langsamen Achse ist mit Werten von bis zu Δn = 1 etwa fünfmal größer als bei Kalkspat. Eine saubere Trennung der etwa 1 nm beabstandeten WDM-Kanäle läßt sich daher bereits mit Quecksilberhalogenidkristallen von 2 bis 5 mm Dicke erreichen. Die Verwendung der Quecksilber-I-Halogenide Hg₂Cl₂ und/oder Hg₂Br₂ und/oder Hg₂J₂ als kristalloptische Interferenzfilter mit periodischem Durchlaßbereich, insbesondere für den Wellenlängenmultiplexbetrieb von optischen Netzen in der Telekommunikation, ist daher vorteilhaft.

Die drei Quecksilberhalogenide Hg₂J₂, Hg₂Cl₂ und Hg₂Br₂ lassen sich aus der Dampfphase in guter Qualität als große Kristalle züchten. Die Kristalle lassen sich spalten, sägen und polieren. Säge- und Polituroberflächen können durch Tempern unterhalb der Sublimationstemperatur von uneinheitlichen Oberflächenschichten gereinigt und/oder rekristallisiert werden. Somit können Einflüsse, die die Doppelbrechung beeinträchtigen eliminiert werden.

Vorzugsweise wird als doppelbrechendes Element ein Quecksilberiodid-Einkristall Hg₂J₂ verwendet, da dieser im Infraroten die größte Doppelbrechung aufweist.

Durch das doppelbrechende Element wird das eingestrahlte Licht abhängig von dessen Wellenlänge und Anfangspolarisation in einen bestimmten Polarisationszustand gebracht (Polarisationskodierung der spektralen Komponenten).

Damit die parallel zur langsamen bzw. schnellen Achse des doppelbrechenden Kristalls polarisierten Komponenten des eingestrahlten Lichts räumlich nicht auseinanderlaufen, wird der Quecksilberhalogenid-Kristall so geschnitten und in den Strahlengang eingebracht, daß die aus langsamer und schneller Achse aufgespannte Ebene parallel zur Front- bzw. Rückfläche des Kristalls und senkrecht zur Strahlrichtung orientiert ist. Somit findet lediglich eine Polarisationsveränderung des einlaufenden Lichts statt, während das räumliche Profil unverändert bleibt.

Wesentlicher Bestandteil des kristalloptischen Interferenzfilters ist neben dem doppelbrechenden Element ein dahinter angeordneter Polarisator, insbesondere Linearpolarisator, welcher dazu dient, die unerwünschten spektralen Komponenten, die durch das doppelbrechende Element mit einem bestimmten Polarisationszustand kodiert wurden, herauszufiltern oder zu reflektieren. Nur diejenigen spektralen Komponenten, deren Polarisation mit der Durchlaßrichtung des Ausgangspolarisators übereinstimmt, werden vom Filter transmittiert. Auf diese Weise wird die spektrale Filterung des optischen Signals erreicht. Der Polarisator ist so in den Strahlengang eingebracht, daß die Polarisations-richtung, die er transmittiert, in der durch langsame und schnelle Achse des doppelbrechenden Elements aufgespannten Ebene liegt.

Damit das doppelbrechende Element die verschiedenen spektralen Komponenten der einlaufenden Welle mit verschiedenen Polarisationen kodieren kann, ist es notwendig, daß das Licht dem doppelbrechenden Element in einem definierten Polarisationszustand zugeführt wird. Dies kann zum einen durch aktives Polarisationsmanagement im optischen Netz realisiert werden, indem z.B. nur bestimmte Polarisationen über die Glasfasern übertragen werden. Vorteilhaft ist darüber hinaus eine Ausgestaltung des kristalloptischen Interferenzfilters, bei welcher vor dem doppelbrechendem Element ein weiterer Polarisator angeordnet ist, da somit das Interferenzfilter unabhängig von den Übertragungseigenschaften des optischen Netzes ist.

Dieser Polarisator ist vorzugsweise ein Linearpolarisator, dessen Durchlaßrichtung um etwa 45° gegenüber der langsamen bzw. schnellen Achse des doppelbrechenden Kristalls versetzt ist. Diese Anordnung maximiert die Wirkungen der Doppelbrechung.

Entsprechend ist es vorteilhaft, wenn die Durchlaßrichtung des Polarisators am Ausgang des doppelbrechenden Elements ebenfalls um etwa 45° gegenüber der langsamen bzw. schnellen Achse des doppelbrechenden Kristalls versetzt ist. Die Durchlaßrichtungen von Ein- und Ausgangspolarisatoren sind damit vorzugsweise parallel oder senkrecht zueinander undliegen in parallelen Ebenen. Das Umschalten vom normalen auf den reziproken Durchlaßbereich des Interferenzfilters gelingt in diesem Fall sehr einfach durch Drehen des Ein- oder Ausgangspolarisators um 90°.

Die kontinuierliche Durchstimmung des spektralen Durchlaßbereichs des Interferenzfilters wird vorteilhaft durch ein elektrooptisches Retardierungselement erreicht, welches am Eingang des doppelbrechenden Elements ggf. zwischen dem Kristall und dem Eingangspolarisator in den Strahlengang eingebracht ist. Durch das elektrooptische Retardierungselement kann die gesamte effektive Doppelbrechung des Interferenzfilters aktiv verändert werden, wodurch auch die Polarisationskodierung der einzelnen spektralen Komponenten variiert wird. Die Polarisationskodierung wird somit durch ein elektrisches Signal, welches die Doppelbrechung des Retardierungselements verändert, gesteuert.

Das elektrooptische Retardierungselement ist vorzugsweise eine schnelle Flüssigkristallzelle, eine Kerr- oder eine Pockelzelle oder eine Zelle aus einem anderen elektrooptischen Material.

Zum Einbau des Interferenzfilters in ein optisches Netz ist vorgesehen, daß es zur Ankopplung an das optische Netz zwischen zwei optischen Faserenden eingefügt ist, wobei das Interferenzfilter und zusätzlich zwei Linsen so angeordnet sind, daß das aus der Faser austretende Licht in die erste Linse eintritt und diese vorzugsweise als ebene Wellen verläßt und nach Passieren des Interferenzfilters in die zweite Linse und von dort in die Faser eintritt. Die Linsen sind Objektive oder Gradientindexlinsen.

Zur Verminderung von Reflexionen an Grenzflächen, insbesondere am Übergang Luft/Glas ist eine Brechungsindexanpassung mittels Ölen mit geeignete Brechungsindizes vorgesehen. Die einzelnen Bauteile bzw. Komponenten des Interferenzfilters, d.h. Polarisatoren, doppelbrechender Kristall und ggf. weitere Verzögerungselemente, werden dabei in definiertem Abstand voneinander angeordnet und die Zwischenräume zwischen den Bauteilen mit Öl gefüllt. Zur Herstellung von Ölspalten definierter Dicke werden vorzugsweise Abstandshalter zwischen den einzelnen Bauteilen verwendet.

Kurzbeschreibung der Zeichnung wobei zeigen:
- Figur 1: ein Interferenzfilter bestehend aus einer doppelbrechenden Platte und jeweils einem Ein- und Ausgangspolarisator
- Figur 2: ein Interferenzfilter bestehend aus einer doppelbrechenden Platte, zwei Polarisatoren sowie einer elektrooptischen Verzögerungsplatte
- Figuren 3 und 4: den Einbau eines Interferenzfilters zwischen zwei Faserenden

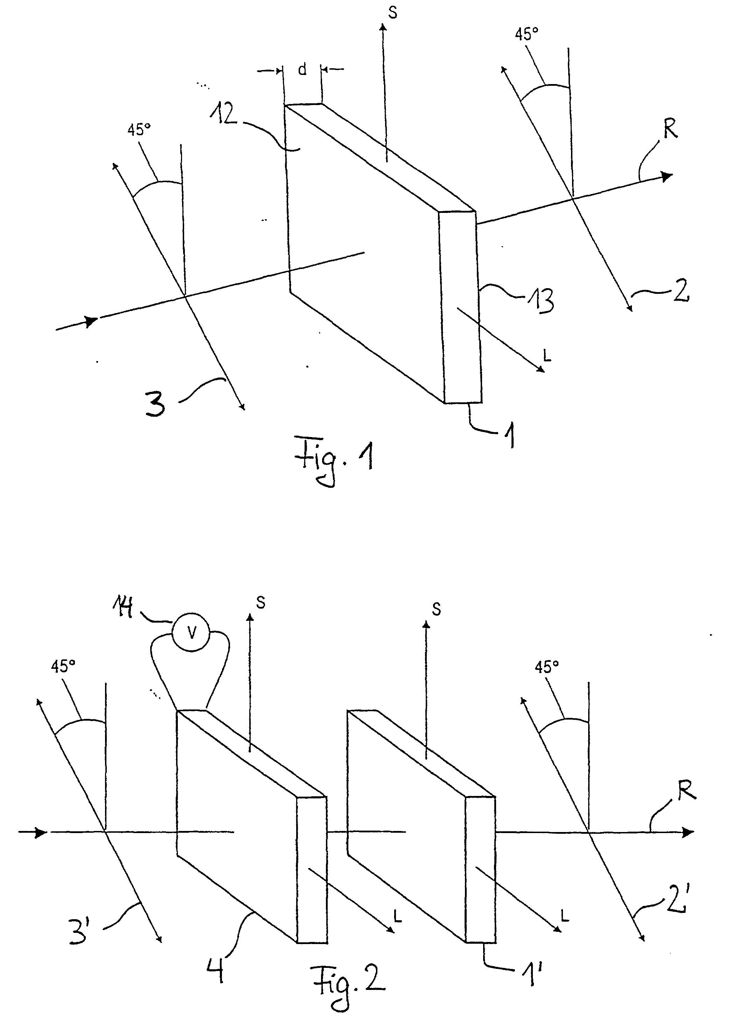

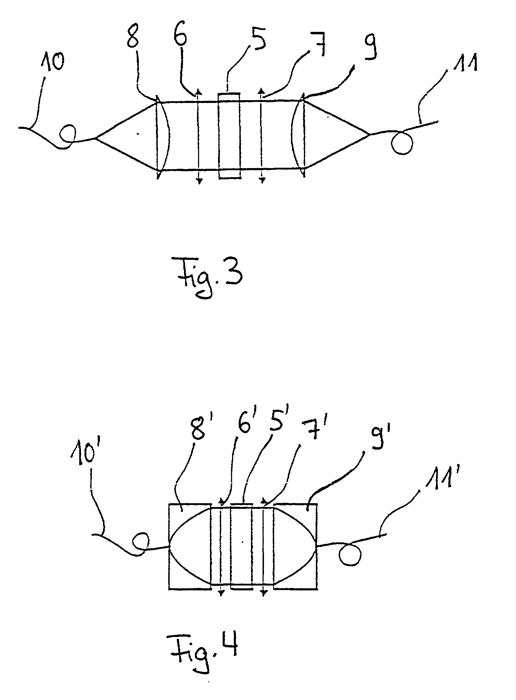

Figur 1 zeigt ein Interferenzfilter, welches aus einer Anordnung aus einem doppelbrechenden Element 1 sowie zwei Linearpolarisatoren 2 und 3 besteht. Das doppelbrechende Element 1 besteht aus einem Quecksilberhalogenid-Einkristall und hat eine Dicke d von einigen Millimetern. Der doppelbrechende Kristall ist so geschnitten, daß die von langsamer und schneller Achse L bzw. F aufgespannte Ebene parallel zur Front- bzw. Rückfläche des Kristalls verläuft, wobei die Strahlrichtung R senkrecht dazu ist.

Der doppelbrechende Kristall weist für entlang der S- bzw. L-Achse polarisiertes Licht, verschiedene Brechungsindizes n_{L} bzw. n_{S} mit einem Brechungsindexunterschied Δn = n_{S}-n_{L} auf. Dies führt für eine spektrale Komponente mit der Wellenlänge λ zu einer Phasendifferenz Δϕ(λ)= 2πdΔn/λ zwischen den beiden Polarisationskomponenten nach Durchlaufen des doppelbrechenden Elements.

Mit Hilfe des Eingangspolarisators 3, dessen Durchlaßrichtung um 45° gegenüber den Achsen des doppelbrechenden Elements 1 gedreht ist, wird zunächst ein definierter Polarisationszustand des Lichts beliebiger Wellenlängen hergestellt, wobei die 45°-Stellung des Polarisators bewirkt, daß die parallel zur schnellen Achse des doppelbrechenden Elements polarisierte Komponente die gleiche Amplitude hat wie die parallel zur langsamen Achse polarisierte. Der anfängliche Phasenunterschied zwischen diesen Polarisationskomponenten vor dem Eintritt in das doppelbrechende Element ist unabhängig von der Wellenlänge für alle spektralen Komponenten gleich Null. Das doppelbrechende Element nimmt nun wellenlängenabhängig eine Polarisationskodierung der spektralen Komponenten vor, indem es einen wellenlängenabhängigen Phasenunterschied Δϕ(λ) zwischen den einzelnen Polarisationskomponenten induziert.

Die spektrale Filterung des polarisationskodierten Lichts erfolgt am Ausgang des doppelbrechenden Elements mit Hilfe eines weiteren Polarisators 2, der hier ebenfalls ein Linearpolarisator ist und dessen Durchlaßrichtung parallel zur Durchlaßrichtung des Eingangspolarisators 3 ist. Der spektralen Filterung liegen theoretisch die Überlegungen zu Pancharatnams Phase zugrunde.

In der hier dargestellten Anordnung wird demnach nur Licht mit einem Phasenunterschied von Δϕ=0 bzw. Δϕ=N2π (N=1,2,...)mit maximaler Intensität von dem Polarisator 2 transmitiert. Für alle anderen Wellenlängen ist das Filter ganz oder teilweise undurchlässig. Es wird somit ein Interferenzfilter mit periodischem, kammartigem Durchlaßbereich realisiert, wobei durch die Wahl von Quecksilberhalogenidkristallen bereits mit wenigen Millimetern dicken Kristallplatten Kanalabstände von etwa einem Nanometer realisiert werden können.

Die Anpassung der spektralen Durchlaßcharakteristik an veränderte Anforderungen im optischen Netz geschieht bei dem hier dargestellten Interferenzfilter durch Verdrehen der Polarisatoren 2 bzw. 3. Das Umschalten auf reziproken Durchlaßbereich, d.h. Transmission aller zuvor komplett unterdrückten Wellenlängen und umgekehrt, wird durch Verdrehen des Polarisators 2 bzw. 3 um 90° erreicht.

Figur 2 zeigt ein Interferenzfilter, welches gegenüber der Anordnung aus Figur 1 um ein elektrooptisches Verzögerungselement 4 erweitert ist. Die sonstige Anordnung der Komponenten doppelbrechende Platte 1', Ausgangspolarisator 2' und Eingangspolarisator 3' entspricht der Gestaltung des Interferenzfilters aus Figur 1.

Das elektrooptische Retardierungselement 4 dient zum kontinuierlichen Durchstimmen des kammartigen Durchlaßbereichs des Interferenzfilters. Das Retardierungselement 4 besteht aus einem Material, dessen Doppelbrechung sich auf elektrischem Wege verändern läßt. Dies geschieht insbesondere dadurch, daß an das Verzögerungselement 4 eine Spannung angelegt wird, welches hier durch eine Spannungsquelle 14 angedeutet ist. Das Retardierungselement 4 ist so ausgerichtet, daß seine schnelle bzw. langsame Achse S bzw. L parallel zu den Achsen des doppelbrechenden Elements 1' verläuft. Besonders geeignet zum kontinuierlichen Durchstimmen sind schnelle Flüssigkristallzellen, Kerrzellen und Pockelszellen und Zellen mit anderen elektrooptischen Materialien.

Die Figuren 3 und 4 zeigen die Anordnung eines Interferenzfilters im Anwendungsfall zwischen zwei Glasfasern 10 und 11 bzw. 10' und 11'. Das kristalloptische Interferenzfilter besteht in beiden Figuren aus einer doppelbrechenden Platte 5 bzw. 5', sowie jeweils einem davor bzw. dahinter angeordneten Polarisator 6, 6', 7, 7'. Die Polarisatoren sind beispielsweise so, wie in den Figuren 1 und 2 dargestellt relativ zueinander und zu den Achsen der doppelbrechenden Platte orientiert.

Aus den Enden der Glasfasern 10, 10' tritt Licht einer gegebenen spektralen Zusammensetzung sich kegelförmig aufweitend aus. Es wird mittels einer ersten Linse 8 bzw. 8' in vorzugsweise ebene Wellen umgewandelt, wobei dann aus der Linse paralleles Licht austritt. Dazu befindet sich das Faserende im Bereich des Brennpunktes der Linse 8 bzw. 8'.

Das auf der Faser 10 ausgekoppelte Licht durchläuft das Interferenzfilter als paralleles Strahlenbündel und trifft am Filterausgang auf eine weitere Linse 9 bzw. 9', mit welcher das Licht wieder in die abgehende Faser 11 bzw. 11' eingekoppelt wird. Dazu befindet sich das Ende der Faser 11 bzw. 11' im Bereich des Brennpunktes der Linse 9 bzw. 9'.

Die Linsen 8 und 9 aus Figur 3 sind infrarottaugliche Objektive, die Linsen 8' und 9' aus Figur 4 sind Gradientenindexlinsen.

### Liste der Bezugszeichen

- 1,1', 5,5': doppelbrechendes Element (Quecksilber-I-Halogenid-Einkristall)
- 2,2', 7,7': Ausgangspolarisator
- 3,3', 6,6': Eingangspolarisator
- 4: elektrooptisches Retardierungselement
- 8,8', 9,9': Linse
- 10,10', 11,11': Faser
- 12, 13: Front- bzw. Rückfläche des doppelbrechenden Elements
- 14: spannungsquelle
- F/L: schnelle/langsame Achse
- R: Strahlrichtung

## Patentansprüche

1. Kristalloptisches Interferenzfilter mit periodischem spektralen Durchlaßbereich, insbesondere für den Wellenlängenmultiplexbetrieb von optischen Netzen in der Telekommunikation, wenigstens bestehend aus einem doppelbrechenden Element (1, 1', 5, 5') sowie einem an dessen Ausgang angeordneten Polarisator (2, 2', 7, 7'), wobei das doppelbrechende Element ein Quecksilber-I-Halogenid-Einkristall aus Hg₂Cl₂ und/oder Hg₂Br₂ und/oder Hg₂J₂ ist, wobei zur kontinuierlichen Durchstimmung des spektralen Durchlaßbereichs des Interferenzfilters zwischen dem doppelbrechenden Element (1, 1', 5, 5') und dem Ausgangspolarisator (2, 2', 7, 7') eine λ/4-Retardierungsplatte unter 45° relativ zur schnellen bzw. langsamen Achse des doppelbrechenden Elements (1, 1' 5, 5') eingefügt ist und die Abstimmung durch Anpassung der Durchlaßrichtung des Ausgangspolarisator (2, 2', 7, 7') möglich ist.

2. Interferenzfilter nach Anspruch 1, **dadurch gekennzeichnet,**
**daß** der doppelbrechende Quecksilber-I-Halogenid-Einkristall so geschnitten ist, daß die von langsamer und schneller Achse (L bzw. F) aufgespannte Ebene parallel zur Front- bzw. Rückfläche (12 bzw. 13) des Kristalls verläuft, wobei die Strahlrichtung (R) senkrecht dazu ist.

3. Interferenzfilter nach Anspruch 1 oder 2, **dadurch gekennzeichnet,**
**daß** vor dem doppelbrechenden Element (1, 1', 5, 5') ein weiterer Polarisator (3, 3', 6, 6') angeordnet ist.

4. Interferenzfilter nach Anspruch 3, **dadurch gekennzeichnet,**
**daß** die Durchlaßrichtung des Polarisators (3, 3', 6, 6') am Eingang des doppelbrechenden Elements (1, 1', 5, 5') um etwa 45° gegenüber der langsamen bzw. schnellen Achse des doppelbrechenden Kristalls versetzt ist.

5. Interferenzfilter nach einem der vorangegangenen Ansprüche, **dadurch gekennzeichnet,**
**daß** die Durchlaßrichtung des Polarisators (2, 2', 7, 7') am Ausgang des doppelbrechenden Elements (1, 1', 5, 5') um etwa 45° gegenüber der langsamen bzw. schnellen Achse des doppelbrechenden Kristalls versetzt ist.

6. Interferenzfilter nach einem der vorangegangenen Ansprüche, **dadurch gekennzeichnet,**
**daß** zur kontinuierlichen Durchstimmung des spektralen Durchlaßbereichs am Eingang bzw. Ausgang des doppelbrechenden Elements ein elektrooptisches Retardierungselement (4) in den Strahlengang eingebracht ist, wobei dieses gegebenenfalls zwischen dem doppelbrechenden Element und dem Eingangs- (3, 3', 6, 6') bzw. Ausgangspolarisator (2, 2', 7, 7') angeordnet ist.

7. Interferenzfilter nach Anspruch 6, **dadurch gekennzeichnet,**
**daß** das elektrooptische Retardierungselement (4) eine schnelle Flüssigkristallzelle ist.

8. Interferenzfilter nach Anspruch 6, **dadurch gekennzeichnet,**
**daß** das elektrooptische Retardierungselement (4) eine Kerr- oder Pockelszelle ist.

9. Interferenzfilter nach einem der vorangegangenen Ansprüche, **dadurch gekennzeichnet,**
**daß** es zur Ankopplung an das optische Netz zwischen zwei optischen Faserenden (10, 10', 11, 11') eingefügt ist, wobei das Interferenzfilter und zusätzlich zwei Linsen (8, 8', 9, 9') so angeordnet sind, daß das aus der Faser (10, 10') austretende Licht in die erste Linse (8, 8') eintritt und diese vorzugsweise als ebene Wellen verläßt und nach Passieren des Interferenzfilters in die zweite Linse (9, 9') und von dort in die Faser (11, 11') eintritt.

10. Interferenzfilter nach Anspruch 9, **dadurch gekennzeichnet,**
**daß** die Linsen Objektive (8, 9) oder Gradientenindexlinsen (8', 9') sind.

11. Interferenzfilter nach Anspruch 19 oder 10, **dadurch gekennzeichnet,**
**daß** die einzelnen Bauteile in definiertem Abstand voneinander angeordnet sind, wobei in die Zwischenräume zur Verminderung von Reflexionen an den Grenzflächen Öle geeigneter Brechungsindizes eingebracht sind.

12. Interferenzfilter nach Anspruch 11, **dadurch gekennzeichnet,**
**daß** Abstandhalter zwischen den einzelnen Bauteilen definierte Ölspalte erzeugen.

13. Verfahren zur aktiven Anpassung des spektralen Durchlaßbereichs eines Interferenzfilters nach einem der Ansprüche 1 bis 12, wobei die Veränderung der Durchlaßcharakteristik durch Verdrehung der Durchlaßrichtung der Polarisatoren (2, 2', 3, 3', 6, 6' 7, 7') am Eingang und/oder Ausgang des Interferenzfilters relativ zu den Achsen des doppelbrechenden Elements (1, 1', 5, 5') und/oder durch Veränderung der doppelbrechenden Eigenschaften des elektrooptischen Retardierungselements (4) erfolgt.

14. Verfahren nach Anspruch 13, **dadurch gekennzeichnet,**
**daß** zum Umschalten des Interferenzfilters auf reziproken Durchlaßbereich die Durchlaßrichtung eines der Polarisatoren (2, 2', 3, 3', 6, 6' 7, 7') am Eingang oder Ausgang des Interferenzfilters um 90° gedreht wird.

## Claims

1. Crystal-optical interference filter with periodic spectral pass band, in particular for the wavelength multiplex operation of optical networks in telecommunications, consisting at least of a birefringent element (1, 1', 5, 5') as well as a polarizer (2, 2', 7, 7') disposed at the output of said birefringent element (1, 1', 5, 5'), the birefringent element being a mercury-1-halogenide single crystal of Hg₂Cl₂ and/or Hg₂Br₂ and/or Hg₂J₂, wherein, for the continuous tuning of the spectral pass band of the interference filter, a λ/4 retardation plate is inserted between the birefringent element (1,1', 5, 5') and the output polarizer (2, 2', 7, 7') at 45° in relation to the fast and slow axis of the birefringent element (1, 1', 5, 5') and tuning is possible by adapting the pass direction of the output polarizer (2, 2', 7, 7').

2. Interference filter according to claim 1, **characterized in that**
the birefringent mercury-I-halogenide single crystal is so cut that the plane spanned by the slow and fast axis (L and F) extends parallel to the front or rear surface (12 or 13) of the crystal, the ray direction (R) being perpendicular thereto.

3. Interference filter according to claim 1 or 2, **characterized in that**
a further polarizer (3, 3', 6, 6') is disposed in front of the birefringent element (1, 1', 5, 5').

4. Interference filter according to claim 3, **characterized in that**
the pass direction of the polarizer (3, 3', 6, 6') at the input of the birefringent element (1, 1', 5, 5') is offset by approximately 45° in relation to the slow or fast axis of the birefringent crystal.

5. Interference filter according to any one of the preceding claims, **characterized in that**
the pass direction of the polarizer (2, 2', 7, 7') at the output of the birefringent element (1, 1', 5, 5') is offset by approximately 45° in relation to the slow or fast axis of the birefringent crystal.

6. Interference filter according to any one of the preceding claims, **characterized in that**,
for the continuous tuning of the spectral pass band, an electro-optical retardation element (4) is introduced into the optical path at the input or output of the birefringent element, such retardation element being disposed, where appropriate, between the birefringent element and the input polarizer (3, 3', 6, 6') or output polarizer (2, 2', 7, 7').

7. Interference filter according to claim 6, **characterized in that**
the electro-optical retardation element (4) is a fast liquid-crystal cell.

8. Interference filter according to claim 6, **characterized in that**
the electro-optical retardation element (4) is a Kerr or Pockels cell.

9. Interference filter according to any one of the preceding claims, **characterized in that**,
for connection to the optical network, said interference filter is inserted between two optical fibre ends (10, 10', 11, 11'), the interference filter and additionally two lenses (8, 8', 9, 9') being so disposed that the light emerging from the fibre (10, 10') enters the first lens (8, 8') and leaves said first lens (8, 8') preferably in the form of plane waves and, after passing the interference filter, enters the second lens (9, 9'), from where it enters the fibre (11, 11').

10. Interference filter according to claim 9, **characterized in that**
the lenses are objectives (8, 9) or graded-index lenses (8', 9').

11. Interference filter according to claim 9 or 10, **characterized in that**
the individual components are disposed at a defined space from each other, oils of suitable refractive indexes being applied to the spaces in order to prevent reflections at the interfaces.

12. Interference filter according to claim 11, **characterized in that**
spacers between the individual components produce defined oil gaps.

13. Method for the active adjustment of the spectral pass band of an interference filter according to any one of claims 1 to 12, the pass characteristic being changed by rotating the pass direction of the polarizers (2, 2', 3, 3', 6, 6', 7, 7') at the input and/or output of the interference filter in relation to the axes of the birefringent element (1, 1', 5, 5') and/or by changing the birefringent properties of the electro-optical retardation element (4).

14. Method according to claim 13, **characterized in that**,
for switching the interference filter to reciprocal pass band, the pass direction of one of the polarizers (2, 2', 3, 3', 6, 6', 7, 7') at the input or output of the interference filter is rotated through 90°.

## Revendications

1. Filtre interférentiel à cristal optique avec bande passante périodique, destiné en particulier à l'exploitation multiplex en longueur d'onde de réseaux optiques de télécommunication, comprenant au moins un élément biréfringent (1,1',5,5') ainsi qu'un polariseur (2,2',7,7'monté à la sortie dudit élément, l'élément biréfringent étant un monocristal d'halogénure mercureux de Hg₂CL₂ et/ou de Hg₂Br₂ et/ou de Hg₂J₂, l'adaptation en continu de la bande passante spectrale dudit filtre interférentiel se faisant à l'aide d'une plaque de retardement λ/4 intercalée à 45° relativement par rapport à l'axe rapide ou lent entre l'élément biréfringent (1,1',5,5') et le polariseur de sortie (2,2',7,7') et le réglage étant rendu possible par adaptation de la direction de transmission du polariseur de sortie (2,2',7,7').

2. Filtre interférentiel selon la revendication 1, **caractérisé en ce que** le monocristal d'halogénure mercureux biréfringent est taillé de telle sorte que le plan déterminé par l'axe lent et rapide (L et/ou F) évolue parallèlement à la surface frontale ou arrière (12 et 13) dudit cristal, le sens du faisceau étant perpendiculaire par rapport audit plan,

3. Filtre interférentiel selon la revendication 1 ou 2, **caractérisé en ce qu'**un polariseur additionnel (3,3',6,6') est placé devant l'élément biréfringent (1,1',5,5').

4. Filtre interférentiel selon la revendication 3, **caractérisé en ce que** la direction de transmission du polariseur (3,3'6,6') à l'entrée de l'élément biréfringent (1,1',5,5') est décalée de 45° environ par rapport à l'axe lent ou rapide du cristal biréfringent.

5. Filtre interférentiel selon l'une quelconque des revendications précédentes, **caractérisé en ce que** la direction de transmission du polariseur (2,2',7,7') à la sortie de l'élément biréfringent (1,1',5,5') est décalée de 45° environ par rapport à l'axe lent ou rapide du cristal biréfringent.

6. Filtre interférentiel selon l'une quelconque des revendications précédentes, **caractérisé en ce que**, pour adapter en continu la bande passante spectrale à l'entrée et à la sortie de l'élément biréfringent, un élément de retardement électrooptique (4) est placé dans le trajet du faisceau, ledit élément de retardement pouvant être placé, le cas échéant, entre l'élément biréfringent et le polariseur d'entrée (3,3',6,6') ou de sortie (2,2'7,7').

7. Filtre interférentiel selon la revendication 6, **caractérisé en ce que** l'élément de retardement électrooptique est une cellule à cristaux liquides rapide.

8. Filtre interférentiel selon la revendication 6, **caractérisé en ce que** l'élément de retardement électrooptique est une cellule de Kerr ou de Pockel.

9. Filtre interférentiel selon l'une quelconque des revendications précédentes, **caractérisé en ce que** pour le raccordement au réseau optique, ledit filtre est intercalé entre deux extrémités de fibres optiques (10,10',11,11'), ledit filtre interférentiel ainsi que deux lentilles supplémentaires (8,8',9,9') étant agencées de manière telle à ce que la lumière sortant de la fibre optique (10,10') entre dans la première lentille (8,8') et la quitte de préférence sous forme d'onde plane pour entrer, après avoir traversé le filtre interférentiel, dans la seconde lentille (9,9') et de là dans la fibre optique (11,11')

10. Filtre interférentiel selon la revendication 9, **caractérisé en ce que** les lentilles sont des objectifs (8,9) ou des lentilles à gradient d'indice (8',9')

11. Filtre interférentiel selon la revendication 9 ou 10, **caractérisé en ce que** les différents composants sont placés dans un intervalle défini les uns par rapport aux autres, les interstices étant remplis d'huiles à indices de réfraction appropriés afin de réduire les réflexions sur les surfaces de séparation.

12. Filtre interférentiel selon la revendication 11, **caractérisé en ce que** des écarteurs placés entre les différents composants réalisent des interstices d'huile définis.

13. Procédé d'adaptation active de la bande passante spectrale d'un filtre interfétentiel selon l'une quelconque des revendications 1 à 12, dans lequel la modification de la caractéristique de transmission s'opère par rotation de la direction de transmission des polariseurs (2,2',3,3',6,6',7,7') à l'entrée et/ou à la sortie du filtre interférentiel relativement aux axes de l'élément biréfringent (1,1'5,5') et/ou par modification des propriétés biréfringentes de l'élément à retardement électrooptique 84).

14. Procédé selon la revendication 13 **caractérisé en ce que** pour commuter le filtre interférentiel sur une bande passante réciproque, le sens de la transmission d'un des polariseurs (2,2',3,3',6,6',7,7') d'entrée ou de sortie du filtre interférentiel est inversé de 90°.
